# EUROPÄISCHE PATENTSCHRIFT

(11) **EP 2 512 650 B1**
(45) Veröffentlichungstag und Bekanntmachung des Hinweises auf die Patenterteilung: **20.05.2015**
(21) Anmeldenummer: 10803371.3
(22) Anmeldetag: 15.12.2010
(51) Int. Cl.: B01J 13/00

(54) **VERFAHREN ZUR HERSTELLUNG VON EINGEKAPSELTEN METALL-KOLLOIDEN ALS ANORGANISCHE FARBPIGMENTE**
METHOD FOR PRODUCING ENCAPSULATED METAL COLLOIDS AS INORGANIC PIGMENTS
PROCÉDÉ POUR PRODUIRE DES COLLOÏDES MÉTALLIQUES ENCAPSULÉS, SOUS FORME DE PIGMENTS INORGANIQUES COLORÉS

(30) Priorität: 18.12.2009 DE 102009059102
(43) Veröffentlichungstag der Anmeldung: 24.10.2012
(73) Patentinhaber: Leibniz-Institut für Neue Materialien gemeinnützige GmbH, 66123 Saarbrücken (DE); Toyota Motor Corporation, Toyota-shi, Aichi 471-8572 (JP)
(72) Erfinder: FINK-STRAUBE, Claudia, 66125 Saarbrücken (DE); FRIES, Kira, 66538 Neunkirchen (DE); MENNIG, Martin, 66287 Quierschied (DE); ANSCHÜTZ, Dieter, 66583 Elversberg (DE); SCHUMACHER, Sarah, 66129 Saarbrücken (DE); DE OLIVEIRA, Peter, William, 66111 Saarbrücken (DE); ISHII, Masahiko, Aichi 444-0071 (JP); MURATA, Wataru, Aichi 458-0808 (JP); VANDENBERGHE, Véronique, 1932 Zaventem (BE)
(74) Vertreter: Patentanwälte Gierlich & Pischitzis Partnerschaft
(86) Internationale Anmeldenummer: PCT/EP2010/007635
(87) Internationale Veröffentlichungsnummer: WO 2011/079909

(56) Entgegenhaltungen:
- WO-A2-01/60740
- DE-A1- 19 520 964

## Beschreibung

### Gebiet der Erfindung

Die vorliegende Erfindung betrifft ein Verfahren zur Herstellung von eingekapselten Metall-Kolloiden als anorganische Farbpigmente.

### Stand der Technik

Anorganische Farbpigmente sind aus dem Stand der Technik bekannt und in vielen Patentschriften beschrieben. Sie werden gewöhnlich durch Oberflächenbeschichtung von Glimmer, Glasschuppen oder -pulver hergestellt. In manchen Fällen basieren die anorganischen Pigmente auf Metalloxiden. In vielen Fällen sind die Pigmentkerne transparent, planar oder schuppig und einschichtig oder mehrschichtig, um bestimmte optische Effekte in den Beschichtungen, Lacken, Farben etc. zu erzielen.

JP 55160061 A (1980) beschreibt eine wässrige Dispersion von Partikeln, enthaltend wasserlösliche Metallsalze, welche mit Reduktionsmitteln (Rohrzucker, Glucose, Aldehyd) behandelt wird, um Pigmente mit einem metallischen Glanz zu erhalten (z.B. silberbeschichtete Glasflocken).

JP 11012488 A (1999) beschreibt gelbliche Pigmente mit mehrschichtigen Metalloxidbeschichtungen und deren Herstellung. Optional umfassen diese Pigmente einen Silberfilm zwischen den Partikeln und den Beschichtungen.

JP 2001288383 A (2001) beschreibt die Herstellung von metalloxidbeschichteten dünnschichtigen anorganischen Materialien. Die beanspruchten Materialien werden durch Sprühtrocknen einer wässrigen Suspension, enthaltend flockige anorganische Komponenten (Glimmer) und Metalloxidpartikel, und durch Calcinieren hergestellt, um Flocken mit silber-perlenartigem Glanz zu erhalten.

JP 2003342496 A (2003) beschreibt SiO₂-beschichtete Gold-Nanopartikel, deren Herstellung und ihre roten Pigmente mit einem scharfen und transparenten Farbton.

EP 501139 (1992) beschreibt ein purpurfarbenes Pigment, mit einer kolloidalen Goldbeschichtung, optional modifiziert mit anderen Metallen (Ag, Cu, Co, Ni, Sn, Ru, Rh, Pd, Os, Ir, Pt) oder Mischungen, deren Herstellung und Verwendung.

WO 01/30921 (2001) beschreibt die Herstellung von mehrschichtigen Glimmer-Plättchen, wobei Glimmer-Plättchen mit Fe₂O₃-TiO₂-Al₂O₃, SiO₂, TiO₂ und Fe₂O₃ beschichtet und bei 850° C calciniert werden, um ein goldfarbenes Pigment mit intensiver Farbe, hoher Deckkraft und starkem Glanz zu erhalten.

Ein Nachteil der oben genannten Pigmente aus dem Stand der Technik besteht darin, dass sie eine mangelhafte Tönungskraft und ein verhältnismäßig niedriges Deckungsvermögen aufweisen. Darüber hinaus sind viele der genannten Pigmente schwierig herzustellen oder zu reproduzieren.

WO 95/13249 (1995) beschreibt ein Verfahren zur Herstellung von funktionellen glasartigen Schichten, welche durch *in situ* hergestellte Metall-Kolloide gefärbt werden. Die Beschichtungen werden auf ein Substrat aufgebracht und thermisch verdichtet, um eine glasartige Schicht zu bilden.

Ein Nachteil dieser Beschichtungen besteht in der begrenzten UV-Stabilität. Ferner sind die hier genannten Metall-Kolloide nicht für Plastikmaterialien, Farbstoffe oder Lacke geeignet.

WO 96/41840 (1996) und DE 19520964 (1996) beschreiben anorganische Pigmente, welche mit Xerogelen oder Gläsern beschichtet sind, welche durch ein Sol-Gel-Verfahren und einen Sprühtrocknungs-Schritt herstellbar sind.

Ein Nachteil dieser anorganischen Pigmente besteht in erster Linie in der mangelnden UV-Stabilität und mangelnden Farbechtheit.

### Aufgabe

Der vorliegenden Erfindung liegt die Aufgabe zugrunde, Farbpigmente zur Verfügung zu stellen, die die Nachteile der Pigmente aus dem Stand der Technik überwinden. Der Erfindung liegt insbesondere die Aufgabe zugrunde, Pigmente für Beschichtungssysteme zur Verfügung zu stellen, mit denen eine hohe Transparenz, hohe Chromatizität und hohe Farbechtheit sowie hohe UV-Stabilität erreicht wird.

### Lösung

Diese Aufgabe wird durch die Erfindungen mit den Merkmalen der unabhängigen Ansprüche gelöst. Vorteilhafte Weiterbildungen der Erfindungen sind in den Unteransprüchen gekennzeichnet. Der Wortlaut sämtlicher Ansprüche wird hiermit durch Bezugnahme zum Inhalt dieser Beschreibung gemacht. Die Erfindung umfasst auch alle sinnvollen und insbesondere alle erwähnten Kombinationen von unabhängigen und/oder abhängigen Ansprüchen.

Im Folgenden werden einzelne Verfahrensschritte näher beschrieben. Die Schritte müssen nicht notwendigerweise in der angegebenen Reihenfolge durchgeführt werden, und das zu schildernde Verfahren kann auch weitere, nicht genannte Schritte aufweisen.

Zur Lösung der oben genannten Aufgabe wird ein Verfahren zur Herstellung von eingekapselten Metall-Kolloiden als anorganische Farbpigmente vorgeschlagen, welches durch folgende Verfahrensschritte gekennzeichnet ist.
a) Umsetzung einer oder mehrerer glasbildender Komponenten nach dem Sol-Gel-Verfahren, um ein Sol zu erhalten;
b) Dispergieren eines Silbersalzes in dem erhaltenen Sol in Gegenwart eines zusätzlichen Reduktionsmittels, um Metall-Kolloide zu bilden;
c) Überführen der erhaltenen Dispersion in Xerogeleingekapselte Metallkolloide durch Sprühtrocknen;
d) Erhitzen der erhaltenen Xerogel-eingekapselten Metallkolloide, um diese zu verdichten;
wobei das zusätzliche Reduktionsmittel, verwendet in Schritt b), mindestens eines ist aus der Gruppe, bestehend aus Glukose, Ascorbinsäure, Formaldehyd, Glycerin, Hexamethylentetraamin, Methoxypolyethylenglykol, Hydrochinon und Harnstoff.

Durch das erfindungsgemäße Verfahren werden überraschenderweise anorganische Farbpigmente (beispielsweise für Lacke) erhalten, welche in Beschichtungssystemen zu einer gesteigerten Chromatizität, hohen Farbechtheit und verbesserten Transparenz führen. Die nach dem erfindungsgemäßen Verfahren erhaltenen Pigmente weisen eine definierte Partikelgröße und Größenverteilung auf und können beispielsweise durch Verwendung von Ultraschall in Beschichtungssysteme dispergiert werden. Die hierbei resultierenden Beschichtungen weisen eine hohe UV-Stabilität, hohe Farbechtheit und hohe Transparenz auf. Die Kapselung definiert den Durchmesser der Farbpigmente. Ferner schützt sie die Metall-Kolloide vor Oxidation. Die anorganische, glasähnliche Kapselung liegt eng an den Metall-Kolloid-Kernen an.

Durch die Tatsache, dass das Dispergieren des Silbersalzes in dem erhaltenen Sol (Schritt b) in Gegenwart eines zusätzlichen Reduktionsmittels erfolgt, bewirkt, dass das Silbersalz nahezu vollständig in Metall-Kolloid umgewandet wird. Dies trägt wiederum zur hohen UV-Stabilität der resultierenden Pigmente bei.

Ein weiterer großer Vorteil der vorliegenden Erfindung besteht in der hohen Temperaturstabilität der Beschichtungen, welche die Farbpigmente aufweisen, die durch das erfindungsgemäße Verfahren erhältlich sind.

Mit Vorteil wird die in Schritt b) des erfindungsgemäßen Verfahrens erhaltene Dispersion einer UV-Behandlung unterzogen. Durch die UV-Behandlung wird eine noch bessere UV-Stabilität der durch das erfindungsgemäße Verfahren erhaltenen anorganischen Farbpigmente erzielt.

Vorzugsweise ist das Sol in Schritt a) des erfindungsgemäßen Verfahrens erhältlich durch Hydrolyse und Polykondensation von
(A) mindestens einem hydrolysierbaren Silan der allgemeinen Formel (I)

   SiX₄ (I)

   in der die Reste X gleich oder verschieden sind und hydrolysierbare Gruppen oder Hydroxylgruppen bedeuten, oder einem davon abgeleiteten Oligomer,
   und
(B) mindestens einem Organosilan der allgemeinen Formel (II)

   R¹ₐR²_{b}SiX_{(4-a-b)} (II)

   in der R¹ eine nicht hydrolysierbare Gruppe ist, R² einen eine funktionelle Gruppe tragenden Rest bedeutet, X die vorstehende Bedeutung hat und a und b den Wert 0, 1, 2 oder 3 haben, wobei die Summe (a+b) den Wert 1, 2 oder 3 hat, oder einem davon abgeleiteten Oligomer in einem Stoffmengen (A) : (B) von 5-50 : 50-95, sowie
(C) gegebenenfalls einer oder mehreren Verbindungen von glasbildenden Elementen.

Dieses Sol, welches als Verkapselungsmittel für die Metall-Kolloide verwendet wird, hat beispielsweise den Vorteil, dass es einer thermischen Verdichtung bei hohen Temperaturen unterzogen werden kann, obwohl es einen relativ hohen Anteil an organischen Komponenten aufweist. Dabei findet ein stetiger Übergang von einem organisch-modifiz.ierten Glas bis zu einem rein anorganischen SiO₂-Glas statt. Das in diesem Material eingekapselte Metall-Kolloid behält seine Funktion (z.B. Lichtabsorption) bei und ergibt, eingebracht in ein Beschichtungssystem, intensiv gefärbte glasartige Beschichtungen. Die Möglichkeit der thermischen Verdichtung bei relativ hohen Temperaturen erlaubt die Herstellung von rissfreien Beschichtungen mit hoher thermischer, mechanischer und chemischer Stabilität auf verschiedenen Oberflächen.

Mit Vorteil werden als hydrolysierbare Silane (A) Tetraalkoxysilane verwendet. Die Alkoxygruppen sind vorzugsweise C₁₋₆-Alkoxy-Gruppen, wie zum Beispiel Methoxy-, Ethoxy-, n-Propoxy, i-Propoxy- und Butoxy-Gruppen.

Der nicht hydrolysierbare Rest R¹ des oben genannten Organosilans der allgemeinen Formel (II) ist beispielsweise Alkyl (vorzugsweise C₁₋₆-Alkyl, wie Methyl, Ethyl, n-Propyl, Isopropyl, n-Butyl, s-Butyl und t-Butyl, Pentyl, Hexyl oder Cyclohexyl) Alkenyl (vorzugsweise C₂₋₆-Alkenyl, wie z.B. Vinyl, 1-Propenyl, 2-Propenyl und Butenyl), Alkinyl (vorzugsweise C₂₋₆-Alkinyl, wie z.B. Acetylenyl und Propargyl) und Aryl (vorzugsweise C₆₋₁₀-Aryl, wie z.B. Phenyl und Naphthyl). Die genannten Reste R¹ und X können gegebenenfalls einen oder mehrere übliche Substituenten, wie z.B. Halogen oder Alkoxy, aufweisen.

Spezielle Beispiele für die funktionellen Gruppen des Restes R² sind die Epoxy-, Hydroxy-, Ether-, Amino-, Monoalkylamino-, Dialkylamino-, Amid-, Carboxy-, Mercapto-, Thioether-, Vinyl-, Acryloxy-, Methacryloxy-, Cyano-, Halogen-, Aldehyd-, Alkylcarbonyl-, Sulfonsäure- und Phosphorsäuregruppen. Diese funktionellen Gruppen sind über Alkylen-, Alkenylen- oder Arylen-Brückengruppen, die durch Sauerstoff- oder Schwefelatome oder - NH-Gruppen unterbrochen sein können, an das Siliciumatom gebunden. Die genannten Brückengruppen leiten sich z.B. von den oben genannten Alkyl-, Alkenyl- oder Arylresten ab. Die Reste R² enthalten vorzugsweise 1 bis 18, insbesondere 1 bis 8 Kohlenstoffatome.

In der allgemeinen Formel (II) hat a vorzugsweise den Wert 0, 1 oder 2, b vorzugsweise den Wert 1 oder 2 und die Summe (a+b) vorzugsweise den Wert 1 oder 2.

Besonders bevorzugte hydrolysierbare Silane (A) sind Tetraalkoxysilane, wie Tetraethoxysilan (TEOS). Besonders bevorzugte Organosilane sind Epoxysilane, wie 3-Glycidyloxy-propyltrimethoxysilan (GPTS) und Aminosilane wie 3-Aminopropyltriethoxysilan und 3- (Aminoethylamino)-propyl-triethoxysilan (DIAMO).

Das Stoffmengenverhältnis des hydrolysierbaren Silans (A) zu dem Organosilan (B) beträgt 5 bis 50 : 50 bis 95, vorzugsweise 15 bis 25 : 75 bis 85.

Die Eventualkomponente (C) ist vorzugsweise im Reaktionsmedium löslich oder dispergierbar. Verwendbar sind z.B. Verbindungen (Halogenide, Alkoxide, Carboxylate, Chelate, etc.) von Lithium, Natrium, Kalium, Rubidium, Cäsium, Beryllium, Magnesium, Calcium, Strontium, Barium, Bor, Aluminium, Titan, Zirkon, Zinn, Zink oder Vanadium. Die Hydrolyse und Polykondensation wird entweder in Abwesenheit eines Lösungsmittels oder vorzugsweise in einem wässrigen oder wässrig/organischen Reaktionsmedium, gegebenenfalls in Gegenwart eines sauren oder basischen Kondensationskatalysators wie HCl, HNO₃ oder NH₃ durchgeführt. Bei Einsatz eines flüssigen Reaktionsmediums sind die Ausgangskomponenten in dem Reaktionsmedium löslich. Als organische Lösungsmittel eignen sich insbesondere mit Wasser mischbare Lösungsmittel, z.B. ein- oder mehrwertige aliphatische Alkohole, Ether, Ester, Ketone, Amide, Sulfoxide und Sulfone.

Mit Vorteil werden als Organosilane (B) Epoxysilane oder Aminosilane verwendet.

Mit Vorteil wird die Hydrolyse und Polykondensation der oben genannten Komponenten in Gegenwart eines Komplexbildners durchgeführt, z.B. in Gegenwart von Nitraten, ß-Dicarbonylverbindungen (z.B. Acetylacetonaten oder Acetessigsäureester), Carbonsäuren (z.B. Methacrylsäure) oder Carboxylaten (z.B. Acetat, Citrat oder Glykolat), Betainen, Diolen, Diaminen (z.B. DIAMO) oder Kronenether.

Bei einer besonders bevorzugten Variante des erfindungsgemäßen Verfahrens wird der Brechungsindex des Sols, erhältlich in Schritt a), vorzugsweise unter Verwendung von B₂O₃, an die jeweilige Verwendung angepasst. Das erfindungsgemäße Verfahren bietet die Möglichkeit des Modifizierens der Kapselungszusammensetzung, um die optischen Eigenschaften der resultierenden Beschichtungen zu kontrollieren. So ist es beispielsweise ein Ziel, den Brechungsindex derart anzupassen, dass die Kapselung in der Beschichtung nicht zu sehen ist. Brechungsindexdifferenzen zwischen dem Polymer und dem Glaskomposit können zu störenden Streuphänomenen führen. Ferner bewirkt eine Veränderung im Brechungsindex des Kapselungsmaterials unterschiedliche spezielle optische Effekte.

Mit Vorteil sind die verwendeten Silbersalze, die vorzugsweise in komplexierter Form vorliegen, ausgewählt aus der Gruppe, bestehend aus Metallnitraten, -halogeniden, -carbiden, -nitriden, -arseniden, -phosphiden und -chalkogeniden.

Das zusätzliche Reduktionsmittel, welches in Schritt b) verwendet wird, ist mindestens eines aus der Gruppe, bestehend aus Glukose, Ascorbinsäure, Formaldehyd, Glycerin, Hexamethylentetraamin, Methoxypolyethylenglykol, Hydrochinon und Harnstoff. Diese Stoffe bewirken ein nahezu vollständiges Umwandeln der verwendeten Metall-Salze in Metall-Kolloide, was wiederum zu einer beträchtlichen Erhöhung der UV-Stabilität der erhaltenen Farbpigmente führt.

Bei einer bevorzugten Variante des erfindungsgemäßen Verfahrens werden die erhaltenen Xerogel-eingekapselten Metall-Kolloide auf bis zu 775° C erhitzt. Dies geschieht vorzugsweise bei einer Geschwindigkeit von 2 K/min und wird mit Vorteil drei Stunden lang unter einer Stickstoff-Atmosphäre durchgeführt. Vor der Erhitzung auf 775° C werden die Xerogel-eingekapselten Metall-Kolloide vorzugsweise drei Stunden lang unter Luftatmosphäre auf 500° C erhitzt. Auch diese Temperatur wird vorzugsweise mit einer Geschwindigkeit von 2K/min erreicht.

Vorzugsweise weisen die unbeschichteten Metall-Kolloid-Partikel einen Durchmesser von 5 - 25 nm auf. Die Größe der Metall-Kolloide kann in erster Linie durch die Behandlung mit hoher Temperatur (z.B. 775° C) gesteuert werden.

Vorzugsweise weisen die eingekapselten Metall-Kolloide eine Korngröße zwischen 50 nm und 2 µm, besonders bevorzugt zwischen 100 nm und 1.5 µm, zum Beispiel von ca. 1 µm oder 1 µm (gemessen mit HREM), auf. Die Größe dieser Partikel kann in erster Linie durch Veränderung der Parameter im Sprühtrocknung-Prozess und im Sol-System gesteuert werden.

Das zusätzliche Reduktionsmittel wird bevorzugt im Überschuss bezogen auf das Silbersalz angewendet, zum Beispiel zwischen 1:1 und 1:100 (Molverhältnis zwischen dem zu reduzierenden Metallion und dem zusätzlichen Reduktionsmittel) oder 1:2 und 1:100. Es kann auch ein geringeres molares Verhältnis zwischen 1:0.01 und 1:1 oder 1:0.1 und 1:0.5 verwendet werden. Die folgenden Verhältnisse sind Beispiele für verschiedene Reduktionsmittel: Glucose 1:1 bis 1:10; Arcorbinsäure 1:0.1 bis 1:10; Formaldehyd 1:1 bis 1:100 bevorzugt 1:1 bis 1:10; Hexamethylentetraamin 1:1 bis 1:10; Methoxypolyethylenglycol 1:1 bis 1:10; Hydrochinon 1:1 bis 1:10 oder Harnstoff 1:1 bis 1:10. Auch Kombinationen zwei oder mehr Reduktionsmitteln können verwendet werden, wobei die zusammengefassten molaren Verhältnisse zu den vorstehend genannten Verhältnissen führen, zum Beispiel Ag, Hydrochinon und Ascorbinsäure im Verhältnis von 1:2:1 bis 1:1:2 bevorzugt 1:1:1, oder Ag, Hydrochinon und Formaldehyd 1:1:0,2 bis 1:1:1, bevorzugt 1:1:0,5.

Die vorliegende Erfindung betrifft ferner anorganische Farbpigmente, insbesondere herstellbar durch das oben genannte erfindungsgemäße Verfahren, umfassend Metall-Kolloide, die aus Silbersalzen hergestellt sind und in einer Kapselung eingekapselt sind, wobei die Kapselung nach dem Sol-Gel-Verfahren aus glasbildenden Komponenten hergestellt und zu einem Xerogel oder Glas verdichtet ist, wobei der Anteil an Metall-Kolloid in den Kapseln mindestens 80%, vorzugsweise mindestens 95%, besonders bevorzugt nahezu 100%, beträgt. Durch den hohen Anteil an Metall-Kolloiden in den Kapseln der erfindungsgemäßen Farbpigmente wird eine besonders hohe UV-Stabilität sowie eine hohe Temperatur-Stabilität dieser Farbpigmente erreicht. Die hohe UV-Stabilität der erfindungsgemäßen Farbpigmente bzw. der mit den erfindungsgemäßen Farbpigmenten versehenen Beschichtungen wurde beispielsweise durch Bewitterungstests oder UV-VIS-Spektroskopie nachgewiesen. Beim Bewitterungstest der Beschichtungen, welche die erfindungsgemäßen Farbpigmente aufweisen, wurde keinerlei Ausbleichen der Farbe beobachtet. Allerdings führte eine starke UV-Bestrahlung zu einer leichten Intensivierung der Farbe der Beschichtungen, was darauf zurückzuführen ist, dass evtl. noch vorhandenes Metall-Salz in den Kapseln in Metall-Kolloid umgewandelt wurde. Ferner zeigen die Beschichtungen, welche erfindungsgemäße Farbpigmente aufweisen, eine hohe Transparenz, hohe Chromatizität und eine gesteigerte Farbechtheit. Zudem sind die verwendeten Materialien zur Herstellung der erfindungsgemäßen Farbpigmente in der Regel ungiftig und umweltfreundlich.

Weitere Einzelheiten und Merkmale ergeben sich aus der nachfolgenden Beschreibung von bevorzugten Ausführungsbeispielen in Verbindung mit den Unteransprüchen. Hierbei können die jeweiligen Merkmale für sich alleine oder zu mehreren in Kombination miteinander verwirklicht sein. Die Möglichkeiten, die Aufgabe zu lösen, sind nicht auf die Ausführungsbeispiele beschränkt. So umfassen beispielsweise Bereichsangaben stets alle - nicht genannten - Zwischenwerte und alle denkbaren Teilintervalle. Es sind zahlreiche Abwandlungen und Weiterbildungen der beschriebenen Ausführungsbeispiele verwirklichbar.

### Beispiel eines durchgeführten Bewitterungstestes:

### "Xenon-Lichtbogen-Bewitterungstest":

Testbedingungen:
Equipment: Atlas Ci 4000
Arbeitszyklen: 102 Minuten Bestrahlung, 18 Minuten Bestrahlung + Regen;
Lichtintensität (300 - 400 nm): 60 W/m²;
Trockenphase: 63° C, 50% relative Luftfeuchtigkeit;
Regenphase: 45° C, 95% relative Luftfeuchtigkeit;
Sprührate: 200 ml/min.

Der Test dauerte 1000 Stunden für gefärbte Beschichtungen auf Glasplatten; die L*-, a*- und b*-Werte wurden durch UV-VIS-Spektroskopie vor, während und nach dem Bewitterungstest gemessen.

Vorzugsweise ist die Kapselung der erfindungsgemäßen anorganischen Farbpigmente erhältlich durch Hydrolyse und Polykondensation von
(D) mindestens einem hydrolysierbaren Silan der allgemeinen Formel (I)

   SiX₄ (I)

   in der die Reste X gleich oder verschieden sind und hydrolysierbare Gruppen oder Hydroxylgruppen bedeuten, oder einem davon abgeleiteten Oligomer,
   und
(E) mindestens einem Organosilan der allgemeinen Formel (II)

   R¹ₐR²_{b}SiX_{(4-a-b)} (II)

   in der R¹ eine nicht hydrolysierbare Gruppe ist, R² einen eine funktionelle Gruppe tragenden Rest bedeutet, X die vorstehende Bedeutung hat und a und b den Wert 0, 1, 2 oder 3 haben, wobei die Summe (a+b) den Wert 1, 2 oder 3 hat, oder einem davon abgeleiteten Oligomer
   in einem Stoffmengen (A) : (B) von 5-50 : 50-95, sowie
(F) gegebenenfalls einer oder mehreren Verbindungen von glasbildenden Elementen.

Mit Vorteil werden als hydrolisierbare Silane (A) Tetraalkoxysilane verwendet. Die Alkoxygruppen sind vorzugsweise C₁₋₆-Alkoxy-Gruppen, wie zum Beispiel Methoxy-, Ethoxy-, n-Propoxy, i-Propoxy- und Butoxy-Gruppen.

Der nicht hydrolysierbare Rest R¹ des oben genannten Organosilans der allgemeinen Formel (II) ist beispielsweise Alkyl (vorzugsweise C₁₋₆-Alkyl, wie Methyl, Ethyl, n-Propyl, Isopropyl, n-Butyl, s-Butyl und t-Butyl, Pentyl, Hexyl oder Cyclohexyl, Alkenyl (vorzugsweise C₂₋₆-Alkenyl, wie z.B. Vinyl, 1-Propenyl, 2-Propenyl und Butenyl), Alkinyl (vorzugsweise C₂₋₆-Alkinyl, wie z.B. Acetylenyl und Propargyl) und Aryl (vorzugsweise C₆₋₁₀-Aryl, wie z.B. Phenyl und Naphthyl). Die genannten Reste R¹ und X können gegebenenfalls einen oder mehrere übliche Substituenten, wie z.B. Halogen oder Alkoxy, aufweisen.

Spezielle Beispiele für die funktionellen Gruppen des Restes R² sind die Epoxy-, Hydroxy-, Ether-, Amino-, Monoalkylamino-, Dialkylamino-, Amid-, Carboxy-, Mercapto-, Thioether-, Vinyl-, Acryloxy-, Methacryloxy-, Cyano-, Halogen-, Aldehyd-, Alkylcarbonyl-, Sulfonsäure- und Phosphorsäuregruppen. Diese funktionellen Gruppen sind über Alkylen-, Alkenylen- oder Arylen-Brückengruppen, die durch Sauerstoff- oder Schwefelatome oder - NH-Gruppen unterbrochen sein können, an das Siliciumatom gebunden. Die genannten Brückengruppen leiten sich z.B. von den oben genannten Alkyl-, Alkenyl- oder Arylresten ab. Die Reste R² enthalten vorzugsweise 1 bis 18, insbesondere 1 bis 8 Kohlenstoffatome.

In der allgemeinen Formel (II) hat a vorzugsweise den Wert 0, 1 oder 2, b vorzugsweise den Wert 1 oder 2 und die Summe (a+b) vorzugsweise den Wert 1 oder 2.

Besonders bevorzugte hydrolysierbare Silane (A) sind Tetraalkoxysilane, wie Tetraethoxysilan (TEOS). Besonders bevorzugte Organosilane sind Epoxysilane, wie 3-Glycidyloxy-propyltrimethoxysilan (GPTS) und Aminosilane wie 3-Aminopropyltriethoxysilan und 3- (Aminoethylamino)-propyl-triethoxysilan (DIAMO).

Das Stoffmengenverhältnis des hydrolysierbaren Silans (A) zu dem Organosilan (B) beträgt 5 bis 50 : 50 bis 95, vorzugsweise 15 bis 25 : 75 bis 85.

Die Eventualkomponente (C) ist vorzugsweise im Reaktionsmedium löslich oder dispergierbar. Verwendbar sind z.B. Verbindungen (Halogenide, Alkoxide, Carboxylate, Chelate, etc.) von Lithium, Natrium, Kalium, Rubidium, Cäsium, Beryllium, Magnesium, Calcium, Strontium, Barium, Bor, Aluminum, Titan, Zirkon, Zinn, Zink oder Vanadium. Die Hydrolyse und Polykondensation wird entweder in Abwesenheit eines Lösungsmittels oder vorzugsweise in einem wässrigen oder wässrig/organischen Reaktionsmedium, gegebenenfalls in Gegenwart eines sauren oder basischen Kondensationskatalysators wie HCl, HNO₃ oder NH₃ durchgeführt. Bei Einsatz eines flüssigen Reaktionsmediums sind die Ausgangskomponenten in dem Reaktionsmedium löslich. Als organisch Lösungsmittel eignen sich insbesondere mit Wasser mischbare Lösungsmittel, z.B. ein- oder mehrwertige aliphatische Alkohole, Ether, Ester, Ketone, Amide, Sulfoxide und Sulfone.

Mit Vorteil werden als Organosilane (B) Epoxysilane oder Aminosilane verwendet.

Vorzugsweise wird die Hydrolyse und Polykondensation in Gegenwart eines Komplexbildners durchgeführt z.B. in Gegenwart von Nitraten, ß-Dicarbonylverbindungen (z.B. Acetylacetonaten oder Acetessigsäureester), Carbonsäuren (z.B. Methacrylsäure) oder Carboxylaten (z.B. Acetat, Citrat oder Glykolat), Betainen, Diolen, Diaminen (z.B. DIAMO) oder Kronenether.

Vorzugsweise sind die Silbersalze, die vorzugsweise in komplexierter Form vorliegen, ausgewählt aus der Gruppe, bestehend aus Metallnitraten, -halogeniden, -carbiden, -nitriden, - arseniden, -phosphiden und -chalkogeniden.

Vorzugsweise weisen die unbeschichteten Metall-Kolloid-Partikel einen Durchmesser von 5 - 25 nm auf. Die Größe der Metall-Kolloide kann in erster Linie durch die Behandlung mit hoher Temperatur (z.B. 775° C) gesteuert werden.

Vorzugsweise weisen die eingekapselten Metall-Kolloide eine Korngröße zwischen 50 nm und 2 µm, besonders bevorzugt zwischen 100 nm und 1.5 µm, zum Beispiel von ca. 1 µm oder 1 µm (gemessen mit HREM), auf. Die Größe dieser Partikel kann in erster Linie durch Veränderung der Parameter im Sprühtrocknung-Prozess und im Sol-System gesteuert werden.

Vorzugsweise weisen die eingekapselten Metall-Kolloide eine Korngröße auf. Die Größe dieser Partikel kann in erster Linie durch Veränderung der Parameter im Sprühtrocknung-Prozess und im Sol-System gesteuert werden.

Die vorliegende Erfindung betrifft ferner die Verwendung der erfindungsgemäßen anorganischen Farbpigmente, insbesondere herstellbar durch das oben genannte erfindungsgemäße Verfahren, in Beschichtungssystemen.

### Beispiele:

### 1. Herstellung von SiO₂-eingekapselten Ag-Kolloiden im Nano-Größenbereich als gelbes Pigment-Pulver

### a) Basis-Sol-System mit AgNO₃ (Vergleichsbeispiel)

### Ausgangsmaterialien:

166 ml Ethanol
34,2 ml 3-Glycidyloxypropyltrimethoxysilan (GPTS)
8,5 ml Tetraethoxysilan (TEOS)
6,3 ml 0,1 M Salpetersäure
5,2 g Tetraethylborat (TEB)
1,47 g Silbernitrat
2,5 ml destilliertes Wasser
6,25 ml [3-(2-Aminoethyl-amino)-propyl]-trimethoxysilan (DIAMO)

34,2 ml GPTS und 8,5 ml TEOS werden mit 25,5 ml Ethanol in einem 250 ml-Dreihalskolben mit einem Rückflusskühler und einem Tropftrichter gemischt. Dann werden 6,3 ml 0,1 M Salpetersäure langsam tropfenweise zu der Mischung zugegeben und die entstandene Mischung wird unter Rückfluss fünf Stunden lang erhitzt. Das resultierende vorhydrolisierte GPTS/TEOS-Sol wird mit 125,5 ml Ethanol gelöst, dann werden 5,2 g TEB zugegeben und bei Raumtemperatur gelöst.

In einer zweiten Mischung werden 1,47 g Silbernitrat in 2,5 ml destilliertem Wasser und 15 ml Ethanol in einem 100 ml Zweihalskolben gelöst und 6,25 ml DIAMO werden unter starkem Rühren langsam zugegeben.

Diese silberenthaltende Lösung wird unmittelbar tropfenweise zu dem GPTS/TEOS/TEB-Solsystem bei Raumtemperatur zugegeben und sechzehn Stunden lang auf 50° C erhitzt. Während dieser Wärmebehandlung wechselt die Farbe der kompletten Mischung von leicht gelb in ein dunkles, transparentes braun.

Nach dem Abkühlen auf Raumtemperatur wird dieses Solsystem unter Verwendung eines Mini-Sprühtrockners B-191 (Büchi) sprühgetrocknet. Die Einlasstemperatur des Sprühtrockners betrug 170° C und die Auslasstemperatur 109° C.

Das resultierende gelb-bräunliche Xerogel-Pulver wird in einen Alsinit-Keramik-Tiegel gefüllt und mit einem Temperatur-Programm wärmebehandelt, um die organischen Verbindungen in einem geschlossenen Nabertherm-Ofen auszubrennen. Zuerst wird das Xerogel auf 500° C bei einer Rate von 2 K/min erhitzt und diese Temperatur wird drei Stunden lang unter Luftatmosphäre gehalten. Anschließend wird auf 775° C bei einer Rate von 2 K/min erhitzt und diese Temperatur wird drei Stunden lang unter Stickstoff-Atmosphäre gehalten. Danach wird in dem geschlossenen Ofen auf Raumtemperatur abgekühlt. Die resultierenden anorganischen, SiO₂-eingekapselten Ag-Pigmente in Nano-Größe sind gelblich gefärbt.

### b) Basis-Solsystem mit AgNO₃, zusätzliches Reduktionsmittel

### Ausgangsmaterialien:

170 ml Ethanol
34,2 ml 3-Glycidyloxypropyltrimethoxysilan (GPTS)
8,5 ml Tetraethoxysilan (TEOS)
6,3 ml 0,1 M Salpetersäure
5,2 G Tetraethylborat (TEB)
1,47 g Silbernitrat
2,5 ml destilliertes Wasser
6,25 ml [3-(2-Aminoethyl-amino)-propyl]-trimethoxysilan (DIAMO)
0,95 g Hydrochinon.

Das GPTS/TEOS/TEB-Solsystem wird wie oben beschrieben hergestellt. Auch die zweite Mischung mit Silbernitrat und DIAMO wird wie oben beschrieben hergestellt und unmittelbar tropfenweise zu dem GPTS/TEOS/TEB-Solsystem bei Raumtemperatur zugegeben und sechzehn Stunden lang auf 50° C erwärmt. Während dieser Temperaturbehandlung wechselt die Farbe der kompletten Mischung von leicht gelb zu einem dunklen, transparenten braun. Nach dem Abkühlen auf Raumtemperatur werden 0,95 g des Reduktionsmittels Hydrochinon (als Lösung in 4 ml Ethanol) gegeben und die Mischung wird 30 Minuten lang gerührt. Das Molverhältnis Ag : Reduktionsmittel beträgt in diesem Fall 1:1. Dann wird dieses komplette Solsystem unter Verwendung eines Mini-Sprühtrockners B-191 (Büchi) unter Anwendung der oben genannten Sprühtrocknungsparameter sprühgetrocknet. Das resultierende gelb-bräunliche Xerogel-Pulver wird auch wie oben beschrieben verdichtet. Das resultierende anorganische, SiO₂-eingekapselte Ag-Pigment in Nano-Größe ist gelblich gefärbt.

Getestete Reduktionsmittel:
- Glucose Molverhältnis Ag: Reduktionsmittel = 1:1 und 1:10
- Ascorbinsäure Molverhältnis Ag: Reduktionsmittel = 1:1 und 1:5
- Formaldehyd Molverhältnis Ag: Reduktionsmittel = 1:1
- Glycerin Molverhältnis Ag: Reduktionsmittel = 1:1 und 1:5
- Hexamethylentetraamin Molverhältnis Ag: Reduktionsmittel = 1:1
- Methoxypolyethylenglycol Molverhältnis Ag: Reduktionsmittel = 1:1
- Hydrochinon Molverhältnis Ag: Reduktionsmittel = 1:1 und 1:2 und 1:5
- Harnstoff Molverhältnis Ag: Reduktionsmittel = 1:4

### c) Basis-Solsystem mit AgNO₃, zusätzliche UV-Behandlung (Vergleichsbeispiel)

### Ausgangsmaterialien:

166 ml Ethanol
34,2 ml 3-Glycidyloxypropyltrimethoxysilan (GPTS)
8,5 ml Tetraethoxysilan (TEOS)
6,3 ml 0,1 M Salpetersäure
5,2 g Tetraethylborat (TEB)
1,47 g Silbernitrat
2,5 ml destilliertes Wasser
6,25 ml [3-(2-Aminoethyl-amino)-propyl]-trimethoxysilan (DIAMO)

Das GPTS/TEOS/TEB-Solsystem wird wie oben beschrieben hergestellt. Auch die zweite Mischung mit Silbernitrat und DIAMO wird wie oben beschrieben hergestellt und unverzüglich tropfenweise zu dem GPTS/TEOS/TEB-Solsystem bei Raumtemperatur zugegeben und die Mischung wird sofort mit UV-Bestrahlung unter Rühren der Mischung und unter Verwendung einer Xenonlampe (Oriel, 100 W) eine Stunde lang behandelt, wobei die UV-Intensität auf der Glasoberfläche des Kolbens, welcher die Mischung enthält, von 1 bis 4 mW/cm² (gemessen bei 360 nm) variiert werden kann. Die Sol-Komponenten TEB und/oder DIAMO reagierten als milde Reduktionsmittel für Silbernitrat, aber die Ag-Kolloid-Bildung war sehr langsam. Dieses Experiment wurde nur durch UV-VIS-Spektroskopie untersucht, nicht jedoch für die Herstellung von Pigmenten durch Sprühtrocknen (wegen der langsamen Reduktion des Silbernitrats).

### d) Basis-Solsystem mit AgNO₃, zusätzliches Reduktionsmittel und UV-Behandlung

### Ausgangsmaterialien:

170 ml Ethanol
34,2 ml 3-Glycidyloxypropyltrimethoxysilan (GPTS)
8,5 ml Tetraethoxysilan (TEOS)
6,3 ml 0,1 M Salpetersäure
5,2 g Tetraethylborat (TEB)
1,47 g Silbernitrat
2,5 ml destilliertes Wasser
6,25 ml [3-(2-Aminoethyl-amino)-propyl]-trimethoxysilan (DIAMO)
0,95 g Hydrochinon

Das GPTS/TEOS/TEB-Solsystem wird wie oben beschrieben hergestellt. Auch die zweite Mischung Silbernitrat und DIAMO wird wie oben beschrieben hergestellt und unverzüglich tropfenweise zu dem GPTS/TEOS/TEB-Solsystem bei Raumtemperatur zugegeben und die Mischung wird sofort mit UV-Bestrahlung unter Rühren der Mischung und unter Verwendung einer Xenonlampe (Oriel, 100 W) ca. zwei Stunden lang behandelt, wobei die UV-Intensität auf der Glasoberfläche des Kolbens, welcher die Mischung enthält, von 1 bis 4 mW/cm² (gemessen bei 360 nm) variiert werden kann. Nach einer Stunde UV-Behandlung werden 0,95 g des Reduktionsmittels Hydrochinon (als Lösung in 4 ml Ethanol; Molverhältnis Ag : Reduktionsmittel = 1:1) unter weiterer UV-Bestrahlung des Solsystems und Rühren für ca. 45 Minuten unter diesen Bedingungen zugegeben. Dann wird dieses komplette Solsystem wie oben beschrieben sprühgetrocknet. Das resultierende gelb-bräunliche Xerogel-Pulver wird ebenfalls wie oben beschrieben verdichtetet. Das resultierende anorganische, mit SiO₂ eingekapselte Ag-Pigment in Nano-Größe ist gelblich gefärbt.

Getestete Reduktionsmittel:
- Hydrochinon Molverhältnis Ag : Reduktionsmittel = 1:1 und 1:5
- Glucose Molverhältnis Ag : Reduktionsmittel = 1:1
- Ascorbinsäure Molverhältnis Arg : Reduktionsmittel = 1:1 und 1:0,2
- Formaldehyd Molverhältnis Arg : Reduktionsmittel = 1:9, 1:18, 1:45 und 1:90

### e) Basis-Solsystem mit AgNO₃, zusätzliche Reduktionsmittel in Kombination

### Ausgangsmaterialien:

170 ml Ethanol
34,2 ml 3-Glycidyloxypropyltrimethoxysilan (GPTS)
8,5 ml Tetraethoxysilan (TEOS)
6,3 ml 0,1 M Salpetersäure
5,2 g Tetraethylborat (TEB)
1,47 g Silbernitrat
2,5 ml destilliertes Wasser
6,25 ml [3-(2-Aminoethyl-amino)-propyl]-trimethoxysilan (DIAMO)
0,95 g Hydrochinon
1,52 g Ascorbinsäure

Das GPTS/TEOS/TEB-Solsystem wird wie oben beschrieben hergestellt. Auch wird die zweite Mischung mit Silbernitrat und DIAMO wie oben beschrieben hergestellt und unverzüglich tropfenweise zu dem GPTS/TEOS/TEB-Solsystem bei Raumtemperatur zugegeben und sechzehn Stunden lang auf 50° C erwärmt. Während dieser Temperaturbehandlung wechselt die Farbe der kompletten Mischung von leicht gelb in ein dunkles, transparentes braun. Nach dem Abkühlen auf Raumtemperatur wurden 0,95 g Hydrochinon und 1,52 g Ascorbinsäure (als Lösung in 4ml Ethanol) zugegeben und die Mischung wurde 30 Minuten lang gerührt. Das Molverhältnis Ag : Hydrochinon : Ascorbinsäure beträgt 1:1:1. Dann wird das komplette Solsystem unter Verwendung eines Mini-Sprühtrockners B-191 (Büchi) unter den oben genannten Sprühtrocknungsparametern sprühgetrocknet. Das resultierende gelb-bräunliche Xerogel-Pulver wurde ebenfalls wie oben beschrieben verdichtet. Das resultierende anorganische, mit SiO₂ eingekapselte Ag-Pigment in Nano-Größe ist gelblich gefärbt.

Getestete Reduktionsmittelkombinationen:
- Hydrochinon + Ascorbinsäure; Molverhältnis Ag : Hydrochinon : Ascorbinsäure = 1:1:1
- Hydrochinon + Formaldehyd; Molverhältnis Ag : Hydrochinon : Formaldehyd = 1:1:0,5.

Diese Pigmente werden bezüglich ihrer Morphologie (TEM, HREM, ESEM) untersucht und werden auch durch UV-VIS-Spektroskopie gemessen (Messungen der diffusen Reflexion, Transformierung in Absorptionsdaten unter Verwendung des Kubelka-Munk-Verfahrens).

Der Durchmesser der unverkapselten Ag-Kolloide (Metallkerne) beträgt ca. 5-25 nm, gemessen durch TEM, HTEM. Das komplette Pigment (Ag mit SiO₂) weist einen Durchmesser von ca. 1 µm, gemessen durch HREM, auf.

### 2. Herstellung von gefärbten Beschichtungen auf Glasplatten

Zuerst werden ca. 6,6 Gew.-% von hergestelltem Ag-Pigment in ein 2-Komponenten-Klarlacksystem (Acrylharz + Isocyanathärter) inkorporiert. Deshalb wird das Pigment in das Acrylharz unter Verwendung einer Ultraschall-Lanze (ca. 5 - 10 Minuten) inkorporiert. Dann wird der Härter (halbe Gewichtsmenge bezüglich des Acrylharzes) zugegeben (Das Mischungsverhältnis Harz : Härter ist 2:1) und die komplette Mischung wird wenige Minuten lang bei Raumtemperatur gerührt. Dieses gelbgefärbte Beschichtungssystem wird auf Glasplatten (10 cm x 10 cm) unter Verwendung eines manuellen Messers mit einer Nassfilm-Dicke von ca. 120 µm aufgetragen. Dann werden die aufgetragenen Beschichtungen 18 Minuten lang bei einer Temperatur von 140° C verdichtet. Die resultierenden Hartschichten sind gelblich gefärbt und größtenteils transparent.

Diese gefärbten Beschichtungen werden für Bewitterungstests, morphologische Untersuchungen (TEM, HREM, ESEM) und spektroskopische Untersuchungen (UV-VIS) verwendet.

Die Inkorporation der hergestellten Ag-Pigmente (ohne zusätzliche Reduktionsmittel) in dieses Zwei-Komponenten-Klarlacksystem wurde variiert: 2,5 Gew.-%, 5 Gew.-%, 7,5 Gew.-% und 10 Gew.-%. Die resultierenden gefärbten Beschichtungen auf Glasplatten zeigen unterschiedliche Farben und Farbintensitäten. Mit 2,5 Gew.-% Ag-Pigment in dem Klarlacksystem wird eine blassgelbe Farbe erhalten. Unter Verwendung von 5 Gew.-% oder 7,5 Gew.-% Ag-Pigment in dem Klarlacksystem wird eine leuchtend gelb gefärbte, transparente Beschichtung erhalten. Mit 10 Gew.-% Ag-Pigment in dem Klarlacksystem wird eine orange bis leicht bräunliche Farbe erhalten.

Im Falle von Ag-Pigmenten, hergestellt unter Verwendung von zusätzlichen Reduktionsmitteln und/oder UV-Bestrahlung, werden 6,6 Gew.-% Pigment in das Klarlacksystem inkorporiert, was zu leuchtend gelblich gefärbten Beschichtungen führt. Eine Ausnahme ist die Verwendung von Harnstoff als Reduktionsmittel (Molverhältnis von Ag : Harnstoff = 1:4). In diesem Fall sind die resultierenden Beschichtungen mehr bräunlich gefärbt.

## Patentansprüche

1. Verfahren zur Herstellung von eingekapselten Metall-Kolloiden als anorganische Farbpigmente, **gekennzeichnet durch** folgende Verfahrensschritte:
a) Umsetzung einer oder mehrerer glasbildender Komponenten nach dem Sol-Gel-Verfahren, um ein Sol zu erhalten;
b) Dispergieren eines Silbersalzes in dem erhaltenen Sol in Gegenwart eines zusätzlichen Reduktionsmittels, um Metall-Kolloide zu bilden;
c) Überführen der erhaltenen Dispersion in Xerogeleingekapselte Metallkolloide **durch** Sprühtrocknen;
d) Erhitzen der erhaltenen Xerogel-eingekapselte Metallkolloide, um diese zu verdichten;
wobei das zusätzliche Reduktionsmittel, verwendet in Schritt b), mindestens eines ist aus der Gruppe, bestehend aus Glukose, Ascorbinsäure, Formaldehyd, Glycerin, Hexamethylentetraamin, Methoxypolyethylenglykol, Hydrochinon und Harnstoff.

2. Verfahren nach Anspruch 1, **dadurch gekennzeichnet, dass** die in Schritt b) erhaltene Dispersion einer UV-Behandlung unterzogen wird.

3. Verfahren nach einem der Ansprüche 1 oder 2, **dadurch gekennzeichnet, dass** das Sol in Schritt a) erhältlich ist durch Hydrolyse und Polykondensation von
(A) mindestens einem hydrolisierbaren Silan der allgemeinen Formel (I)
SiX₄ (I)
in der die Reste X gleich oder verschieden sind und hydrolisierbare Gruppen oder Hydroxylgruppen bedeuten, oder einem davon abgeleiteten Oligomer,
und
(B) mindestens einem Organosilan der allgemeinen Formel (II)
R¹ₐR²_{b}SiX_{(4-a-b)} (II)
in der R¹ eine nicht hydrolysierbare Gruppe ist, R² einen eine funktionelle Gruppe tragenden Rest bedeutet, X die vorstehende Bedeutung hat und a und b den Wert 0, 1, 2 oder 3 haben, wobei die Summe (a+b) den Wert 1, 2 oder 3 hat, oder einem davon abgeleiteten Oligomer
in einem Stoffmengen (A) : (B) von 5-50 : 50-95, sowie
(C) gegebenenfalls einer oder mehreren Verbindungen von glasbildenden Elementen.

4. Verfahren nach Anspruch 3, **dadurch gekennzeichnet, dass** als hydrolysierbare Silane (A) Tetraalkoxysilane verwendet werden.

5. Verfahren nach einem der Ansprüche 3 oder 4, **dadurch gekennzeichnet, dass** als Organosilane (B) Epoxysilane oder Aminosilane verwendet werden.

6. Verfahren nach einem der Ansprüche 3 bis 5, **dadurch gekennzeichnet, dass** die Hydrolyse und Polykondensation in Gegenwart eines Komplexbildners durchgeführt wird.

7. Verfahren nach einem der vorhergehenden Ansprüche, **dadurch gekennzeichnet, dass** der Brechungsindex des Sols, erhältlich in Schritt a), vorzugsweise unter Verwendung von B₂O₃, an die jeweilige Verwendung angepasst wird.

8. Verfahren nach einem der vorhergehenden Ansprüche, **dadurch gekennzeichnet, dass** die Silbersalze, die vorzugsweise in komplexierter Form vorliegen, ausgewählt sind aus der Gruppe, bestehend aus Metallnitraten, -halogeniden, -carbiden, - nitriden, -arseniden, -phosphiden und -chalkogeniden.

9. Verfahren nach einem der vorhergehenden Ansprüche, **dadurch gekennzeichnet, dass** die erhaltenen Xerogeleingekapselte Metall-Kolloide auf 775° C erhitzt werden.

10. Verfahren nach einem der vorhergehenden Ansprüche, **dadurch gekennzeichnet, dass** die unbeschichteten Metall-Kolloid-Kerne einen Durchmesser von 5 - 25 nm aufweisen.

11. Verfahren nach einem der vorhergehenden Ansprüche, **dadurch gekennzeichnet, dass** die eingekapselten Metall-Kolloide eine Korngröße zwischen 50 nm und 2 µm aufweisen.

## Claims

1. Process for producing encapsulated metal colloids useful as inorganic coloured pigments, **characterized by** the steps of:
a) reacting one or more glass-forming components according to the sol-gel process to obtain a sol;
b) dispersing a silver salt in the resulting sol in the presence of an additional reducing agent to form metal colloids;
c) converting the resulting dispersion into xerogel-encapsulated metal colloids by spray drying;
d) heating the resulting xerogel-encapsulated metal colloids to densify them; wherein the additional reducing agent used in step b) is at least one from the group consisting of glucose, ascorbic acid, formaldehyde, glycerol, hexamethylenetetraamine, methoxy polyethylene glycol, hydroquinone and urea.

2. Process according to Claim 1, **characterized in that** the dispersion obtained in step b) is subjected to a UV treatment.

3. Process according to either of Claims 1 and 2, **characterized in that** the sol in step a) is obtainable by hydrolysis and polycondensation of
(A) at least one hydrolysable silane of the general formula (I)
SiX₄ (I)
where the X radicals are the same or different and represent hydrolysable groups or hydroxyl groups, or an oligomer derived therefrom,
and
(B) at least one organosilane of the general formula (II)
R¹ₐR²_{b}SiX_{(4-a-b)} (II)
where R¹ is a non-hydrolysable group, R² is a radical bearing a functional group, X is as defined above and a and b are each 0, 1, 2 or 3 provided the sum (a + b) is 1, 2 or 3, or an oligomer derived therefrom in an amount of substance ratio for (A):(B) of 5-50:50-95, and also
(C) optionally one or more compounds of glass-forming elements.

4. Process according to Claim 3, **characterized in that** tetraalkoxysilanes are used as hydrolysable silanes (A).

5. Process according to either of Claims 3 and 4, **characterized in that** epoxysilanes or aminosilanes are used as organosilanes (B).

6. Process according to any one of Claims 3 to 5, **characterized in that** the hydrolysis and polycondensation is carried out in the presence of a complexing agent.

7. Process according to any one of the preceding claims, **characterized in that** the refractive index of the sol obtainable in step a), preferably by using B₂O₃, is adapted to the particular use.

8. Process according to any one of the preceding claims, **characterized in that** the silver salts, which are preferably in complexed form, are selected from the group consisting of metal nitrates, metal halides, metal carbides, metal nitrides, metal arsenides, metal phosphides and metal chalcogenides.

9. Process according to any one of the preceding claims, **characterized in that** the xerogel-encapsulated metal colloids obtained are heated to 775°C.

10. Process according to any one of the preceding claims, **characterized in that** the uncoated metal colloid cores have a diameter of 5 - 25 nm.

11. Process according to any one of the preceding claims, **characterized in that** the encapsulated metal colloids have a particle size of between 50 nm and 2 µm.

## Revendications

1. Procédé pour la préparation de colloïdes métalliques encapsulés comme pigments colorés inorganiques, **caractérisé par** les étapes de procédé suivantes :
a) transformation d'un ou de plusieurs composants formant un verre selon le procédé sol-gel, pour obtenir un sol ;
b) dispersion d'un sel d'argent dans le sol obtenu en présence d'un agent de réduction supplémentaire, pour former des colloïdes métalliques ;
c) transformation de la dispersion obtenue en colloïdes métalliques encapsulés dans un xérogel par séchage par pulvérisation ;
d) chauffage des colloïdes métalliques encapsulés dans un xérogel obtenus pour les compacter ;
l'agent de réduction supplémentaire, utilisé dans l'étape b), étant au moins un agent du groupe constitué par le glucose, l'acide ascorbique, le formaldéhyde, le glycérol, l'hexaméthylènetétraamine, le méthoxypolyéthylèneglycol, l'hydroquinone et l'urée.

2. Procédé selon la revendication 1, **caractérisé en ce que** la dispersion obtenue dans l'étape b) est soumise à un traitement par des UV.

3. Procédé selon l'une quelconque des revendications 1 ou 2, **caractérisé en ce que** le sol dans l'étape a) peut être obtenu par hydrolyse et polycondensation de
(A) au moins un silane hydrolysable de formule générale (I)
SiX₄ (I)
dans laquelle les radicaux X sont identiques ou différents et signifient des groupes hydrolysables ou des groupes hydroxyle, ou un oligomère dérivé de celui-ci, et
(B) au moins un organosilane de formule générale (II)
R¹ₐR²_{b}SiX_{(4-a-b)} (II)
dans laquelle R¹ est un groupe non hydrolysable, R² signifie un radical portant un groupe fonctionnel, X a la signification ci-dessus et a et b valent 0, 1, 2 ou 3, la somme (a + b) valant 1, 2 ou 3, ou un oligomère dérivé de celui-ci
en des quantités massiques (A):(B) de 5-50:50-95, ainsi que
(C) le cas échéant un ou plusieurs composés d'éléments formant un verre.

4. Procédé selon la revendication 3, **caractérisé en ce qu'**on utilise, comme silanes hydrolysables (A), des tétraalcoxysilanes.

5. Procédé selon l'une quelconque des revendications 3 ou 4, **caractérisé en ce qu'**on utilise, comme organosilanes (B), des époxysilanes ou des aminosilanes.

6. Procédé selon l'une quelconque des revendications 3 à 5, **caractérisé en ce que** l'hydrolyse et la polycondensation sont réalisées en présence d'un complexant.

7. Procédé selon l'une quelconque des revendications précédentes, **caractérisé en ce que** l'indice de réfraction du sol, obtenu dans l'étape a), de préférence en utilisant du B₂O₃, est adapté à chaque utilisation.

8. Procédé selon l'une quelconque des revendications précédentes, **caractérisé en ce que** les sels d'argent, qui se trouvent de préférence sous forme complexée, sont choisis dans le groupe constitué par les nitrates, les halogénures, les carbures, les nitrures, les arséniures, les phosphures et les chalcogénures métalliques.

9. Procédé selon l'une quelconque des revendications précédentes, **caractérisé en ce que** les colloïdes métalliques encapsulés dans un xérogel obtenus sont chauffés à 775°C.

10. Procédé selon l'une quelconque des revendications précédentes, **caractérisé en ce que** les noyaux des colloïdes non revêtus métalliques présentent un diamètre de 5-25 nm.

11. Procédé selon l'une quelconque des revendications précédentes, **caractérisé en ce que** les colloïdes métalliques encapsulés présentent une grosseur de grain entre 50 nm et 2 µm.
